# DEMANDE DE BREVET EUROPEEN

(11) **EP 4 461 712 A1**
(43) Date de publication de la demande: **13.11.2024**
(21) Numéro de dépôt: 24174353.3
(22) Date de dépôt: 06.05.2024
(51) Int. Cl.: C04B 28/02, C04B 18/10, C04B 14/02

(54) **BETON INTEGRANT AU MOINS UNE PORTION DE BIOCHAR DANS SA COMPOSITION**

(30) Priorité: 12.05.2023 FR 2304712
(71) Demandeur: Spurgin Leonhart, 67600 Selestat (FR)
(72) Inventeur: BOLLARD, Pierre, SAINT-JORIOZ (FR); TORNATORE, Pino, COLMAR (FR)
(74) Mandataire: Cabinet Nuss

(57) **Abrégé**

L'invention concerne un béton pour la réalisation de construction ou éléments de construction bas carbone, caractérisé en ce que la composition intègre au moins une portion de biochar comme agrégat en complément de ciment et d'eau

## Description

La présente invention se rapporte au domaine des constructions et éléments de construction bas carbone et plus particulièrement au domaine des bétons bas carbone pour la réalisation de constructions.

Dans le cadre de la lutte contre le réchauffement climatique, des contraintes règlementaires sont apparues pour réduire les émissions de gaz à effet de serre. Si le secteur des transports est le premier visé par ces mesures, le domaine des bâtiments est également impacté par ces contraintes. En effet, il ne s'agit uniquement d'évaluer la réduction de gaz à effet de serre n'est pas évaluée par le prisme de la seule consommation d'énergie mais par l'empreinte carbone, c'est-à-dire la mesure du volume de dioxyde de carbone (CO₂) émis par combustion d'énergies fossiles, le dioxyde de carbone étant le principal gaz à effet de serre qui contribue au réchauffement climatique.

Dans le domaine de la construction, les performances en matière d'empreinte carbone sont mesurées sur l'ensemble de cycle de vie du bâtiment, depuis sa phase d'édification jusqu'à sa démolition. Cette évaluation est ainsi effectuée à l'appui de différents critères que sont notamment la cohérence de la construction, la limitation des sources d'énergie carbonées pour l'exploitation du bâtiment, voire encore la valorisation du stockage de carbone.

Dans le cadre d'une construction, l'utilisation de béton constitue une source importante d'énergie carbonée. En effet, la production d'un béton de composition de type classique, par exemple à partir de ciment de type CEM II/A 52.5R, de sable, de gravier et d'eau, est susceptible de générer un bilan carbone de l'ordre de 203 kg de CO₂ par mètre cube produit. Aussi, pour s'affranchir de ce type de contrainte, la réalisation de mélanges intégrant du bois broyé ont été développées pour obtenir de nouvelles compositions correspondant à des bétons de bois. De tels bétons de bois permettent effectivement d'obtenir des bétons avec un bilan carbone négatif. Toutefois, cette réduction du bilan carbone par rapport à un béton de composition classique s'accompagne également d'une réduction conséquente de la résistance mécanique du béton de bois à la compression par rapport à un béton de composition classique. Aussi, la solution apportée par l'introduction de bois dans la composition d'un béton contraint à une réduction du champ d'application de celui-ci dans le cadre d'opérations de constructions.

La présente invention a pour but de pallier ces inconvénients en proposant une solution technique dont le bilan carbone est négatif et permet de compenser le défaut de décarbonation d'autres opérations de construction susceptibles d'intervenir sur un chantier, tout en répondant favorablement aux impératifs de résistance en compression rencontrés dans un large champs d'application d'opérations de constructions.

L'invention a ainsi pour objet un béton pour la réalisation de construction ou éléments de construction bas carbone, caractérisé en ce que la composition intègre au moins une portion de biochar comme agrégat en complément de ciment et d'eau.

L'invention concerne également une unité structurelle de construction destinée au remplissage et/ou de fabrication de prémur ou prédalle, caractérisé en ce que cette unité est réalisée dans un béton selon l'invention.

L'invention sera mieux comprise, grâce à la description ci-après, qui se rapporte à différents modes de réalisation préférés, donnés à titre d'exemple non limitatif, et expliqués. avec référence aux tableaux annexés, dans lesquels :

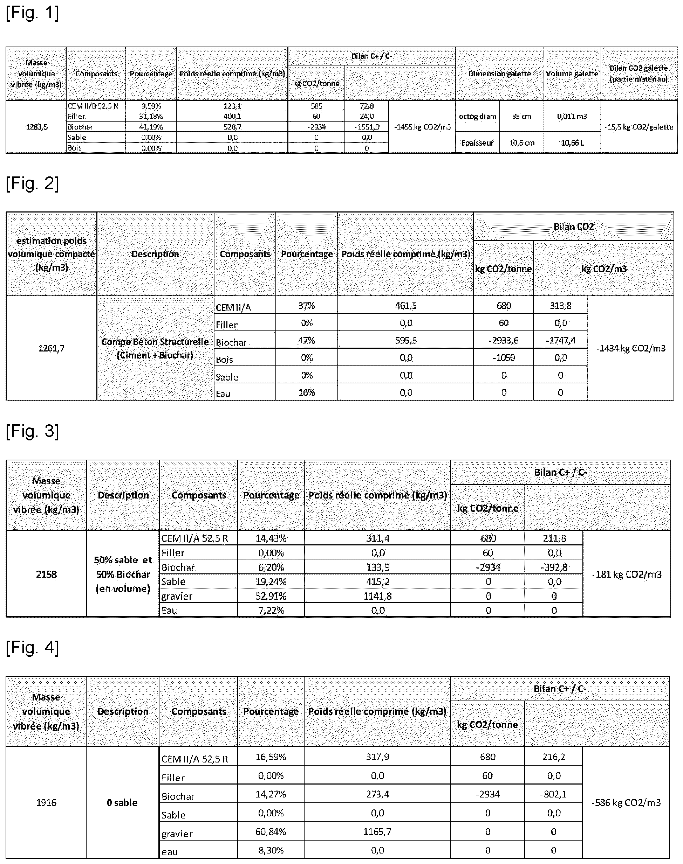

[Fig. 1] représente un tableau synthétique de différentes caractéristiques d'un exemple de béton selon la première gamme particulière de béton selon l'invention.
[Fig. 2] représente un tableau synthétique de différentes caractéristiques d'un exemple de béton selon la deuxième gamme particulière de béton selon l'invention.
[Fig. 3] représente un tableau synthétique de différentes caractéristiques d'un exemple de béton selon la troisième gamme particulière de béton selon l'invention.
[Fig. 4] représente un tableau synthétique de différentes caractéristiques d'un exemple de béton selon la quatrième gamme particulière de béton selon l'invention.

La présente invention se rapporte à un béton pour la réalisation de construction ou éléments de construction bas carbone, caractérisé en ce que la composition intègre au moins une portion de biochar comme agrégat en complément de ciment et d'eau. Le biochar, également connu sous le terme charcoal ou charbon de bois d'origine végétale, est un composé obtenu par pyrolyse de biomasse et qui permet une rétention de carbone sous la forme d'un produit inerte à haute densité de carbone par rapport à d'autres produits ou composés. Cette inertie du biochar assure un stockage et une rétention du carbone sans risque de libération de celui-ci, pendant une durée aussi longue que nécessaire. Par ses propriétés, le biochar constitue un substitut, total ou partiel, aux agrégats qui, mélangés au ciment, participent à la composition et à la réalisation d'un béton. Ainsi, alors qu'une composition d'un béton de type classique comprend, outre le ciment, du sable et du gravier, la composition d'un béton selon l'invention comprend également du biochar en remplacement de tout ou partie du sable et du gravier. De façon complémentaire, le biochar intégré au mélange pour la réalisation d'un béton est susceptible d'être également associé à une ou plusieurs fines ou fillers qui correspondent notamment à des granulats, par exemple, de type poudre de pierre ou carbonates de chaux ou encore fumée de silice, et dont la finesse est, par exemple, de l'ordre de 0 à 125 µm.

Selon un exemple de réalisation qui correspond à une variante du béton de l'invention, le biochar comprend une granulométrie comprise entre 0 et 5 mm, préférentiellement de l'ordre de 0 à 2 mm. Cette granulométrie du biochar est choisie de sorte que le biochar se substitue de façon optimale aux agrégats, sable et/ou gravier, qu'il remplace.

Selon un autre exemple qui correspond à une variante de réalisation d'une première gamme particulière de béton selon l'invention et dont les caractéristiques sont susceptibles d'être combinées à celles des exemples précédemment détaillés, le béton présente une composition dépourvue de gravier et comprenant, en pourcentage massique, entre 25% et 50% de biochar et au plus 20% de ciment. De façon préférentielle, le pourcentage massique de biochar est compris entre 30% et 50% et idéalement entre 40% et 50%. A titre d'exemple de réalisation, la composition est susceptible de comprendre, en pourcentage massique, 9,59% de ciment, par exemple un ciment de type CEM II/B 52.5 N avec 31,19% de filler, 41,19% de biochar et 18% d'eau. La production d'un béton avec une telle composition présente un bilan carbone négatif de l'ordre de -1455 kg de CO₂/m³, ainsi qu'une masse volumique de l'ordre de 1283,5 kg/m³. Outre un bilan carbone plus intéressant, un béton avec un telle composition présente également une masse volumique plus légère que celle d'un béton classique qui est de l'ordre de 2338 kg/m³.

Selon un autre exemple de réalisation d'un béton avec une telle composition, celui-ci est susceptible de ne nécessiter aucune opération d'étuvage dans le cadre de sa production.

Selon un autre exemple qui correspond à une variante particulière de réalisation de cette première gamme de béton selon l'invention, sept jours après coulage d'un béton de cette composition, ce béton présente une résistance mécanique à la compression d'au moins 0,5 MPa ou 0,5×10⁶ Pascals, voire même, de façon préférée, une résistance mécanique à la compression d'au moins 3,4 MPa ou 3,4×10⁶ Pascals. Aussi, un béton selon cette première gamme particulière est susceptible d'être utilisé comme matériau de réservation particulièrement pertinent comme alternative aux blocs de polystyrène habituellement intégrés dans l'épaisseur de dalles, d'éléments de dallage ou de prémurs. De même, un béton selon cette première gamme particulière constitue un matériau intéressant pour la réalisation d'éléments formant des unités structurelles, par exemple sous la forme de galettes, destinées au remplissage de prémur ou de prédalle. A titre d'exemple, dans le cadre de la réalisation de galettes dont le volume individuel est de l'ordre de 10,5 litres, chacune des galettes produites présente un bilan carbone négatif de l'ordre de -15,5 kg de CO₂.

Il convient également de relever que l'invention porte également sur une unité structurelle de construction destinée au remplissage et/ou de fabrication de prémur ou prédalle, caractérisé en ce que cette unité est réalisée dans un béton selon l'invention, c'est-à-dire intégrant du biochar, et plus particulièrement un béton dont la composition correspond à celle de cette première gamme de béton selon l'invention.

Selon un autre exemple qui correspond à une variante de réalisation d'une deuxième gamme particulière de béton selon l'invention et dont les caractéristiques sont susceptibles d'être combinées à celles de certains des exemples précédemment détaillés, le béton présente une composition dépourvue de gravier comprenant, en pourcentage massique, entre 35% et 60% de biochar et au plus 60% de ciment. De façon préférentielle, le pourcentage massique de biochar est compris entre 40% et 60% et idéalement entre 45% et 60%. Une telle composition est dosée de façon plus importante en biochar que dans le cadre de la première gamme particulière mais permet également d'aboutir à des niveaux de résistance mécanique plus importants. De même, cette composition est également susceptible d'être totalement dépourvue de fine ou filler. A titre d'exemple de réalisation, la composition est susceptible de comprendre, en pourcentage massique, 37% de ciment, par exemple un ciment de type CEM II/A 52.5R, 47% de biochar et 16% d'eau. La production d'un béton avec une telle composition présente un bilan carbone négatif de l'ordre de -1434 kg de CO₂/m³, ainsi qu'une masse volumique de l'ordre de 1261,7 kg/m³.

Il convient de relever que, au cours des dix-huit premières heures après coulage/moulage, un béton selon cette deuxième gamme particulière est susceptible de nécessiter une opération d'étuvage à 35°Celsius.

Selon un autre exemple qui correspond à une variante particulière de réalisation de cette deuxième gamme de béton selon l'invention, vingt-huit jours après coulage, le béton présente une résistance mécanique à la compression d'au moins 14 MPa ou 14×10⁶ Pascals. Selon un exemple plus spécifique de mise en oeuvre susceptible d'être obtenu notamment dans le cadre d'un béton dont la composition est détaillée précédemment, le béton présente une résistance mécanique à la compression de l'ordre de 14,3 MPa ou 14,3×10⁶ Pascals à sept jours et de l'ordre de 17,8 MPa ou 17,8×10⁶ Pascals à vingt-huit jours. Aussi, un béton selon cette deuxième gamme particulière est susceptible d'être utilisé comme matériau de construction pour la réalisation de structures non-armées, ainsi que comme un matériau alternatif aux bétons de type béton bois.

Selon un autre exemple qui correspond à une variante de réalisation d'une troisième gamme particulière de béton selon l'invention et dont les caractéristiques sont susceptibles d'être combinées à celles de certains des exemples précédemment détaillés, le béton présente une composition comprenant du gravier et, en pourcentage massique, entre 5% et 12% de biochar et au plus 30% de ciment, voire même 25% de ciment. Une telle composition intègre du biochar tout en permettant d'aboutir à des niveaux de résistance mécanique plus élevés que dans le cadre des première et deuxième gammes de bétons. Ainsi, le béton présente une composition dans laquelle une partie du sable d'un béton classique est substitué par du biochar, par exemple de sorte que le biochar et le sable soient présents dans des volumes similaires voire identiques. A titre d'exemple de réalisation, la composition est dépourvue de filaire et susceptible de comprendre, en pourcentage massique, 14,43% de ciment, par exemple un ciment de type CEM II/A 52.5 R avec 6,2% de biochar, 19,24% de sable, 52,91% de gravier et 7,22% d'eau. La production d'un béton avec cette composition présente un bilan carbone négatif de l'ordre de -181 kg de CO₂/m³, ainsi qu'une masse volumique de l'ordre de 2158 kg/m³. Aussi, un béton avec un telle composition présente une masse volumique plus légère que celle d'un béton classique tout en ayant un bilan carbone négatif.

Il convient de relever que, au cours des seize premières heures après coulage/moulage, un béton selon cette troisième gamme particulière est susceptible de nécessiter une opération d'étuvage à 35°Celsius.

Selon un autre exemple qui correspond à une variante particulière de réalisation de cette troisième gamme de béton selon l'invention, vingt-huit jours après coulage, le béton présente une résistance mécanique à la compression d'au moins 30 MPa ou 30×10⁶ Pascals. Selon un exemple plus spécifique de mise en oeuvre susceptible d'être obtenu notamment dans le cadre d'un béton dont la composition est détaillée précédemment, le béton présente une résistance mécanique à la compression de l'ordre de 35,1 MPa ou 35,1×10⁶ Pascals à sept jours et de l'ordre de 40,7 MPa ou 40,7×10⁶ Pascals à vingt-huit jours.

Selon un autre exemple qui correspond à une variante de réalisation d'une quatrième gamme particulière de béton selon l'invention et dont les caractéristiques sont susceptibles d'être combinées à celles de certains des exemples précédemment détaillés, le béton présente une composition comprenant du gravier et du biochar comme seuls agrégats et, en pourcentage massique, entre 12% et 30% de biochar et au plus 30% de ciment. De façon préférentielle, le pourcentage massique de biochar est d'au moins 15 %. Ainsi, le béton présente une composition dans laquelle le biochar substitue intégralement le sable d'un béton classique. A titre d'exemple de réalisation, la composition est dépourvue de filaire et de sable et est susceptible de comprendre, en pourcentage massique, 16,59% de ciment, par exemple un ciment de type CEM II/A 52.5 R avec 14,27% de biochar, 60,84% de gravier et 8,30% d'eau. La production d'un béton avec cette composition présente un bilan carbone négatif de l'ordre de -586 kg de CO₂/m³, ainsi qu'une masse volumique de l'ordre de 1916 kg/m³. Aussi, un béton avec un telle composition présente une masse volumique plus légère que celle d'un béton classique tout en ayant, là aussi, un bilan carbone négatif.

Il convient de relever que, au cours des seize premières heures après coulage/moulage, un béton selon cette quatrième gamme particulière est susceptible de nécessiter une opération d'étuvage à 35°Celsius.

Selon un autre exemple qui correspond à une variante particulière de réalisation de cette quatrième gamme de béton selon l'invention, vingt-huit jours après coulage, le béton présente une résistance mécanique à la compression d'au moins 20 MPa soit 20×106 Pascals. Selon un exemple plus spécifique de mise en oeuvre susceptible d'être obtenu notamment dans le cadre d'un béton dont la composition est détaillée précédemment, le béton présente une résistance mécanique à la compression de l'ordre de 21 MPa ou 21 ×106 Pascals à sept jours et de l'ordre de 25,9 MPa ou 25,9×106 Pascals à vingt-huit jours.

Il convient de relever que, compte tenu de leurs résistances mécaniques respectives à la compression, les bétons réalisées selon ces troisième et quatrième gammes particulières sont susceptibles d'être utilisés comme matériau de construction pour des structures porteuses armées ou non-armées aptes à être appliquées dans des prémurs, prédalles et/ou murs pleins. De même, ces troisième et quatrième gammes particulières sont susceptibles d'être utilisés comme matériau de construction pour des dalles massives.

Dans le cadre de l'invention, la résistance mécanique de chacun de ces différents types de béton est susceptible d'être ajustée en modifiant la quantité de ciment dans les proportions propres à chacune des gammes particulières de béton détaillées précédemment. En effet, la résistance mécanique en compression du béton est en mesure d'être améliorée en augmentant la quantité de ciment dans la composition correspondante de béton. Une telle augmentation de ciment impacte le bilan carbone du béton produit. Toutefois, il convient de relever que le dégagement de CO₂ supplémentaire par cet apport additionnel de ciment se trouve amplement compensé par l'importance du poids carbone négatif du biochar. En effet, il est rappelé que si le bilan carbone du ciment est positif et de l'ordre de 680 kgCO₂ par tonne, le bilan carbone du biochar est négatif de l'ordre de -2934 kgCO₂/tonne. Aussi, une addition de ciment dans la composition du béton n'affecte que faiblement l'important déficit en carbone apportée par le biochar.

L'invention porte aussi sur une construction ou portion de construction dépourvue d'armature caractérisée en ce qu'elle intègre un béton selon l'invention ou intégrant une composition telle qu'elle est détaillée précédemment pour les deuxième, troisième et quatrième gammes particulières de béton.

De même, l'invention porte encore sur une construction ou portion de construction pourvue d'armature caractérisée en ce qu'elle intègre un béton selon l'invention ou intégrant une composition telle qu'elle est détaillée précédemment pour les troisième et quatrième gammes particulières de béton.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Béton pour la réalisation de construction ou éléments de construction bas carbone, **caractérisé en ce que** la composition intègre au moins une portion de biochar comme agrégat en complément de ciment et d'eau.

2. Béton selon la revendication 1, **caractérisé en ce que** le biochar comprend une granulométrie comprise entre 0 et 5 mm.

3. Béton selon une des revendications 1 à 2, **caractérisé en ce que** le béton présente une composition dépourvue de gravier et comprenant, en pourcentage massique, entre 25% et 50% de biochar et au plus 20% de ciment.

4. Béton selon la revendication 3, **caractérisé en ce que**, sept jours après coulage, le béton présente une résistance mécanique à la compression d'au moins 0,5 MPa (10⁶ Pascals).

5. Béton selon une des revendications 1 à 2, **caractérisé en ce que** le béton présente une composition dépourvue de gravier comprenant, en pourcentage massique, entre 35% et 60% de biochar et au plus 60% de ciment.

6. Béton selon la revendication 5, **caractérisé en ce que**, vingt-huit jours après coulage, le béton présente une résistance mécanique à la compression d'au moins 14 MPa (10⁶ Pascals).

7. Béton selon une des revendications 1 à 2, **caractérisé en ce que** le béton présente une composition comprenant du gravier et, en pourcentage massique, entre 5% et 12% de biochar et au plus 30% de ciment.

8. Béton selon la revendication 7, **caractérisé en ce que**, vingt-huit jours après coulage, le béton présente une résistance mécanique à la compression d'au moins 30 MPa (10⁶ Pascals).

9. Béton selon une des revendications 1 à 2, **caractérisé en ce que** le béton présente une composition comprenant du gravier et du biochar comme seuls agrégats et, en pourcentage massique, entre 12% et 30% de biochar et au plus 30% de ciment.

10. Béton selon la revendication 9, **caractérisé en ce que**, vingt-huit jours après coulage, le béton présente une résistance mécanique à la compression d'au moins 20 MPa (10⁶ Pascals).

11. Unité structurelle de construction destinée au remplissage et/ou de fabrication de prémur ou prédalle, **caractérisé en ce que** cette unité est réalisée dans un béton selon une des revendications 1 à 4.

12. Construction ou portion de construction dépourvue d'armature **caractérisée en ce qu'**elle intègre un béton selon une des revendications 1, 2, 5 à 10.

13. Construction ou portion de construction pourvue d'armature **caractérisée en ce qu'**elle intègre un béton selon une des revendications 1, 2, 7 à 10.
